# EUROPÄISCHE PATENTANMELDUNG

(11) **EP 2 489 840 A1**
(43) Veröffentlichungstag der Anmeldung: **22.08.2012**
(21) Anmeldenummer: 11190429.8
(22) Anmeldetag: 24.11.2011
(51) Int. Cl.: F01K 27/00, H02J 15/00, F04B 39/00, F02C 6/16

(54) **Energiespeicher und Verfahren zu dessen Betrieb**

(30) Priorität: 08.12.2010 EP 10194133
(71) Anmelder: Ago Ag Energie + Anlagen, 95326 Kulmbach (DE)
(72) Erfinder: Ramming, Klaus, 95336 Mainleus (DE)
(74) Vertreter: Bauer, Dirk

(57) **Zusammenfassung**

Offenbart ist zunächst ein Energiespeicher (2, 3, 4, 5) mit einem Wandler (9) zum Verdichten von Luft von einem Ausgangsdruck bis auf einen Speicherdruck unter Einsatz von Energie sowie zum Entspannen der Luft von dem Speicherdruck auf den Ausgangsdruck, und mit einem Druckspeicher (10), in den die mittels des Wandlers (9) verdichtete Luft ladbar und aus dem die verdichtete Luft zum Entspannen durch den Wandler (9) wieder ablassbar ist, wobei beim Ablassen an einer rotierbaren Welle des Wandlers (9) die Energie im Wesentlichen zurück gewinnbar ist, wobei der Wandler (9) mindestens einen Flüssigkolbenwandler (13) mit jeweils einem Flüssigkolben zum Verdichten und Entspannen der Luft aufweist, eine Pumpe (14) zum Pumpen einer Kolbenflüssigkeit des mindestens einen Flüssigkolben unter Einsatz der Energie sowie einen mittels der Kolbenflüssigkeit antreibbaren Flüssigkeitsmotor (15) zum Antreiben der Welle, wobei aus dem mindestens einen Flüssigkolbenwandler (13) mittels einer Wärmeträgerflüssigkeit Wärme abführbar und in den mindestens einen Flüssigkolbenwandler (13) mittels der Wärmeträgerflüssigkeit Wärme zuführbar ist.

Um die Kühlung sicherzustellen wird vorgeschlagen, dass die Wärmeträgerflüssigkeit von der Kolbenflüssigkeit fluidtechnisch getrennt ist.

## Beschreibung

Die Erfindung betrifft zunächst einen Energiespeicher mit einem Wandler zum Verdichten von Luft von einem Ausgangsdruck bis auf einen Speicherdruck unter Einsatz von Energie sowie zum Entspannen der Luft von dem Speicherdruck auf den Ausgangsdruck, und mit einem Druckspeicher, in den die mittels des Wandlers verdichtete Luft ladbar und aus dem die verdichtete Luft zum Entspannen durch den Wandler wieder ablassbar ist, wobei beim Ablassen an einer rotierbaren Welle des Wandlers die Energie im Wesentlichen zurück gewinnbar ist, wobei der Wandler mindestens einen Flüssigkolbenwandler mit jeweils einem Flüssigkolben zum Verdichten und Entspannen der Luft aufweist, eine Pumpe zum Pumpen einer Kolbenflüssigkeit des mindestens einen Flüssigkolben unter Einsatz der Energie sowie einen mittels der Kolbenflüssigkeit antreibbaren Flüssigkeitsmotor zum Antreiben der Welle, wobei aus dem mindestens einen Flüssigkolbenwandler mittels einer Wärmeträgerflüssigkeit Wärme abführbar und in den mindestens einen Flüssigkolbenwandler mittels der Wärmeträgerflüssigkeit Wärme zuführbar ist. Die Erfindung betrifft weiterhin ein Verfahren zum Betrieb eines solchen Energiespeichers.

Ein Energiespeicher und ein Verfahren der vorgenannten Art ist aus WO 2008/139267 A1 bekannt. Sie wandeln zugeführte Energie beim Speichern in potenzielle Energie der verdichteten Luft und umgekehrt beim Entnehmen die potenzielle Energie der verdichteten Luft in die Rotation einer Turbine. Solche Energiespeicher (Luftdruckspeicher oder CAES, Compressed Air Energy Storage) bieten die Möglichkeit, insbesondere bei Stromüberschuss im größeren Maßstab elektrischen Strom zu speichern und bei Strombedarf wieder zu entnehmen.

Im Flüssigkolbenwandler können über die Kolbenflüssigkeit derart große Wärmeströme beim Verdichten in das Gas und beim Entspannen aus dem Gas geführt werden, dass auch schnelle Druck- und Volumenänderungen im Wesentlichen isotherm verlaufen. Flüssigkolbenwandler ermöglichen in einem Schritt beim Verdichten und beim Entspannen ein Druckverhältnis zwischen Ausgangs- und Speicherdruck von 1 : 3 bis 1 : 30 je nach Gestaltung der Wärmeübertragungsfläche. Die isotherme Verdichtung ermöglicht die Wärmeab- und -zufuhr auf einem niedrigen Temperaturniveau. Die Kolbenflüssigkeit kann im Wesentlichen auf Umgebungstemperatur gehalten und die Umgebung als Wärmespeicher genutzt werden: Beim Speichern kann die freiwerdende Wärme mit niedriger Temperatur an die Umgebung abgegeben werden und beim Entnehmen wiederum aus der Umgebung Umweltwärme aufgenommen werden. Weder Wärmespeicher noch die Verwendung hochtemperaturfester Komponenten sind so erforderlich. Im gesamten System treten keine hohen Temperaturen auf. Sämtliche Materialien und Speicher sind lediglich Temperaturen im Umfeld der Umgebungstemperatur ausgesetzt. Hierdurch sinken das Gefährdungspotenzial und die Materialanforderungen.

Beim praktischen Einsatz der bekannten Energiespeicher zeigt sich, dass bei Drücken oberhalb von etwa 20 bar die mit der Kolbenflüssigkeit aus den Flüssgkolbenwandlern abgeführte Kühlleistung nicht ausreicht, um die Temperatur des bekannten Energiespeichers konstant zu halten.

### Aufgabe

Der Erfindung liegt die Aufgabe zugrunde, die Kühlung des Energiespeichers sicherzustellen.

### Lösung

Ausgehend von den bekannten Energiespeichern wird nach der Erfindung vorgeschlagen, dass die Wärmeträgerflüssigkeit von der Kolbenflüssigkeit fluidtechnisch getrennt ist. Die Um- und Durchströmung mit einer separaten Wärmeträgerflüssigkeit erlaubt den Eintrag von signifikant höheren Kühl- und Heizleistungen in den Flüssigkolben.

Ein erfindungsgemäßer Energiespeicher kann bereits mit einem einzelnen Flüssigkolbenwandler und einem Reservoir für die Kolbenflüssigkeit des Flüssigkolben betrieben werden. Durch Parallelschaltung von zwei identischen Flüssigkolbenwandlern und alternierenden Betrieb kann zum Einen auf das Reservoir verzichtet werden. Zum Andern wird die Luft in einem im Wesentlichen kontinuierlichen Strom verdichtet oder entspannt.

Vorzugsweise weist ein erfindungsgemäßer Energiespeicher einen von der Wärmeträgerflüssigkeit durchflossenen Wärmetauscher an dem Druckspeicher auf, mittels dessen Wärme aus dem Druckspeicher abführbar und Wärme dem Druckspeicher zuführbar ist. In einem solchen Energiespeicher kann die Temperatur der verdichteten Luft in dem Druckspeicher auf einem gewünschten Niveau gehalten werden. Insbesondere kann eine unerwünschte Erwärmung beim Speichern vermieden oder das Temperaturniveau nach dem Speichern und vor dem Entnehmen erhöht werden.

Bevorzugt weist ein erfindungsgemäßer Energiespeicher mindestens eine Turbomaschine zum Vorverdichten oder Nachentspannen der Luft zwischen einem Luftanschluss und dem mindestens einen Flüssigkolbenwandler auf. Auch wenn die Verdichtung in den Turbomaschinen isentrop und nicht isotherm abläuft, erreicht man - gegebenen Falls mit einer Zwischenkühlung - eine sehr gute Annäherung an eine isotherme Verdichtung. Turbomaschinen eignen sich sehr gut zur Verdichtung und Entspannung von großen Volumenströmen bei relativ geringen Druckdifferenzen. Genau dieser Vorteil wird bei der Verdichtung und Entspannung von Luft auf Umgebungsdruck ausgenutzt, bei denen ein hoher Luftvolumenstrom verarbeitet werden muss. Im Vergleich zu Turbomaschinen ist bis zu einem Druckniveau von etwa 10 bar der technische und materielle Aufwand der Luftverdichtung mittels Flüssigkolbenverdichtern unwirtschaftlich hoch.

In einer besonders vorteilhaften Ausführungsform weist ein erfindungsgemäßer Energiespeicher eine Mehrzahl der Flüssigkolbenwandler auf zum Laden und Entladen eines gemeinsamen Druckspeichers, sowie eine Kolbensteuerung zum Verbinden jeweils genau eines ersten der Flüssigkolbenwandler aus der Mehrzahl mit den übrigen Flüssigkolbenwandlern aus der Mehrzahl. Beim Laden und Entladen des gemeinsamen Druckspeichers können die Flüssigkolbenwandler eines solchen erfindungsgemäßen Energiespeichers phasenverschoben parallel betrieben werden, was zu einer sehr gleichmäßigen Leistungsaufnahme und -abgabe des Energiespeichers beiträgt: Je mehr Flüssigkolbenwandler phasenverschoben betrieben werden, umso gleichmäßiger wird die Leistungsaufnahme und -abgabe.

Weiterhin vorzugsweise weist ein solcher erfindungsgemäßer Energiespeicher eine Wandlergruppe mit mindestens einer Axialkolbenmaschine je Flüssigkolbenwandler auf. Axialkolbenmaschinen erlauben eine Einstellung des Volumenstroms unabhängig vom Differenzdruck. Sie fördern zum Beginn der Verdichtung, wenn die Druckdifferenz zwischen Saugzylinder und Druckzylinder noch nahezu Null ist, einen maximalen und am Ende der Verdichtung sowie während des Ausschiebens der verdichteten Luft bei einer hohen Druckdifferenz einen minimalen Volumenstrom. Hierdurch ist die Leistungsaufnahme und -abgabe des Energiespeichers sehr gleichmäßig. Axialkolbenmaschinen können darüber hinaus sowohl als Pumpen als auch als Flüssigkeitsmotor betrieben und für die Ein- und Ausspeicherung der Luft genutzt werden. Die Wandlergruppe eines solchen erfindungsgemäßen Energiespeichers stellt zu jedem Zeitpunkt beim Laden jedem Flüssigkolbenwandler eine eigene Pumpe und beim Entladen einen eigenen Flüssigkeitsmotor bereit, da in jedem der Flüssigkolbenwandler die Kolbenflüssigkeit einen anderen Druck aufweist. Alternativ können mehrere der Flüssigkolbenwandler über geregelte Druckminderventile mit einer gemeinsamen Pumpe oder einem gemeinsamen Flüssigkeitsmotor betrieben werden.

Vorteilhafter Weise sind ein erster erfindungsgemäßer Energiespeicher für einen ersten Speicherdruck und ein zweiter erfindungsgemäßer Energiespeicher für einen zweiten Speicherdruck oberhalb des ersten Speicherdrucks derart in einem Energiespeichersystem kombiniert, dass ein Luftanschluss aus einer Umgebung des Energiespeichersystems zu dem Wandler des ersten Energiespeichers führt und eine Luftleitung zwischen dem Wandler des ersten Energiespeichers und dem Wandler des zweiten Energiespeichers verläuft. In einem solchen Energiespeichersystem kann in dem Druckspeicher des zweiten Energiespeichers durch den höheren Speicherdruck eine höhere Energiedichte erzielt werden. Der Druckspeicher des ersten Energiespeichers dient im Wesentlichen dem Massenausgleich zum zweiten Energiespeicher. Der Druckspeicher des zweiten Energiespeichers weist eine im Vergleich deutlich höhere Kapazität (in kWh/m³) auf.

Vorzugsweise weist ein solches Energiespeichersystem einen Bypass zwischen dem Druckspeicher des ersten Energiespeichers und dem Druckspeicher des zweiten Energiespeichers auf. Durch den Bypass können die Druckspeicher der beiden Energiespeicher beim Speichern zu einem Speichervolumen solange zusammengeschaltet werden, bis der Speicherdruck des ersten Energiespeichers erreicht ist.

Besonders bevorzugt weist ein solches Energiespeichersystem mindestens einen weiteren erfindungsgemäßen Energiespeicher für einen weiteren Speicherdruck zwischen dem ersten Speicherdruck und dem zweiten Speicherdruck auf, wobei der Wandler des mindestens einen weiteren Energiespeichers die Luftleitung unterbricht. In einem solchen Energiespeichersystem ist beispielsweise der Ausgangsdruck des ersten Energiespeichers Umgebungsdruck und der Ausgangsdruck jedes weiteren und des zweiten Energiespeichers jeweils der Speicherdruck des in der Reihenschaltung vorhergehenden Energiespeichers.

Ausgehend von den bekannten Verfahren wird nach der Erfindung vorgeschlagen, dass die Wärmeträgerflüssigkeit in einem Wärmeausgleichssystem von einer Kolbenflüssigkeit des Flüssigkolbenwanders (13, 26, 27) fluidtechnisch getrennt ist. Ein erfindungsgemäßes Verfahren ist mit einem erfindungsgemäßen Energiespeicher ausführbar und zeichnet sich durch die dort genannten Vorteile aus.

Vorzugsweise wird im Rahmen eines erfindungsgemäßen Verfahrens beim Speichern aus dem Druckspeicher Wärme derart abgeführt, dass eine Temperatur in dem Druckspeicher nicht steigt, also im Wesentlichen konstant bleibt oder sogar sinkt. So wird eine durch Erwärmung bedingte Steigerung des von dem Wandler beim Verdichten zu überwindenden Gegendrucks vermieden.

In einer besonders vorteilhaften Ausführung eines erfindungsgemäßen Verfahrens wird zwischen Speichern und Entnehmen dem Druckspeicher Wärme zugeführt. In einem solchen erfindungsgemäßen Verfahren durch die Erwärmung der Druck und damit die Energiedichte in dem Druckspeicher und die beim Entnehmen zu gewinnende Energie gesteigert. Wird der Druckspeicher beim Speichern auf Umgebungstemperatur gehalten, dann kann für diese Erwärmung beispielsweise Niedertemperaturabwärme aus technischen Prozessen oder die Temperaturdifferenz zwischen Umgebungsluft und Grundwasser genutzt werden.

Weiterhin wird vorzugsweise im Rahmen eines erfindungsgemäßen Verfahrens beim Entnehmen dem Druckspeicher Wärme derart zugeführt, dass eine Temperatur in dem Druckspeicher nicht sinkt, also im Wesentlichen konstant bleibt oder sogar steigt. So wird eine durch Abkühlung bedingte Minderung des von dem Wandler beim Entspannen nutzbaren Druckdifferenz vermieden.

Vorteilhafter Weise wird eine Mehrzahl von erfindungsgemäßen Energiespeichern jeweils gemäß einem erfindungsgemäßen Verfahren derart betrieben, dass der Ausgangsdruck eines ersten der Energiespeicher ein Umgebungsdruck und der Ausgangsdruck jedes weiteren der Energiespeicher jeweils der Speicherdruck eines der Energiespeicher ist. Die Energiespeicher sind so derart in Reihe geschaltet, dass in jedem weiteren Energiespeicher gegenüber dem vorhergehenden jeweils ein höherer Speicherdruck und eine höhere Energiedichte erzielt wird.

Bevorzugt arbeiten in einem erfindungsgemäßen Verfahren in dem Wandler eine Mehrzahl der Flüssigkolbenwandler derart phasenverschoben, dass zu jedem Zeitpunkt ein erster der Flüssigkolbenwandler aus der Mehrzahl den übrigen Flüssigkolbenwandlern aus der Mehrzahl entgegengesetzt arbeitet. Eine solche Taktung ermöglicht einen besonders effizienten Betrieb eines erfindungsgemäßen Energiespeichers.

Besonders bevorzugt wird in einem solchen erfindungsgemäßen Verfahren zu jedem Zeitpunkt die Kolbenflüssigkeit zwischen dem ersten und den übrigen Flüssigkolbenwandlern ausgetauscht. Der erfindungsgemäße Energiespeicher benötigt dann keinen separaten Vorratsbehälter zum Speisen der Flüssigkolbenwandler mit der Kolbenflüssigkeit.

### Ausführungsbeispiel

Die Erfindung wird nachfolgend anhand von zwei Ausführungsbeispielen erläutert. Es zeigen in Prinzipskizzen
- Fig. 1a: ein erstes Energiespeichersystem mit erfindungsgemäßen Energiespeichern,
- Fig. 1b: einen der Energiespeicher des ersten Energiespeichersystems im Detail und
- Fig. 1c: ein Detail des Wärmeausgleichssystems des ersten Energiespeichersystems,
- Fig. 2a: ein zweites Energiespeichersystem mit erfindungsgemäßen Energiespeichern,
- Fig. 2b: einen der Energiespeicher des zweiten Energiespeichersystems im Detail,
- Fig. 3: ein drittes Energiespeichersystem mit erfindungsgemäßen Energiespeichern sowie
- Fig. 4a: den Füllstand der Flüssigkolbenwandler in einem Zyklus beim Laden des dritten Energiespeichersystems und
- Fig. 4b: den Füllstand der Flüssigkolbenwandler in einem Zyklus bei Entnahme aus dem dritten Energiespeichersystem.

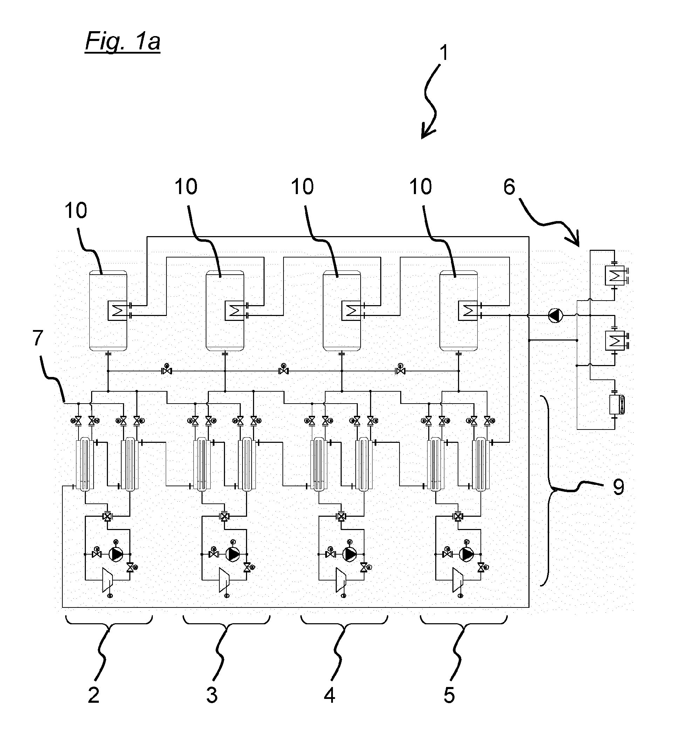

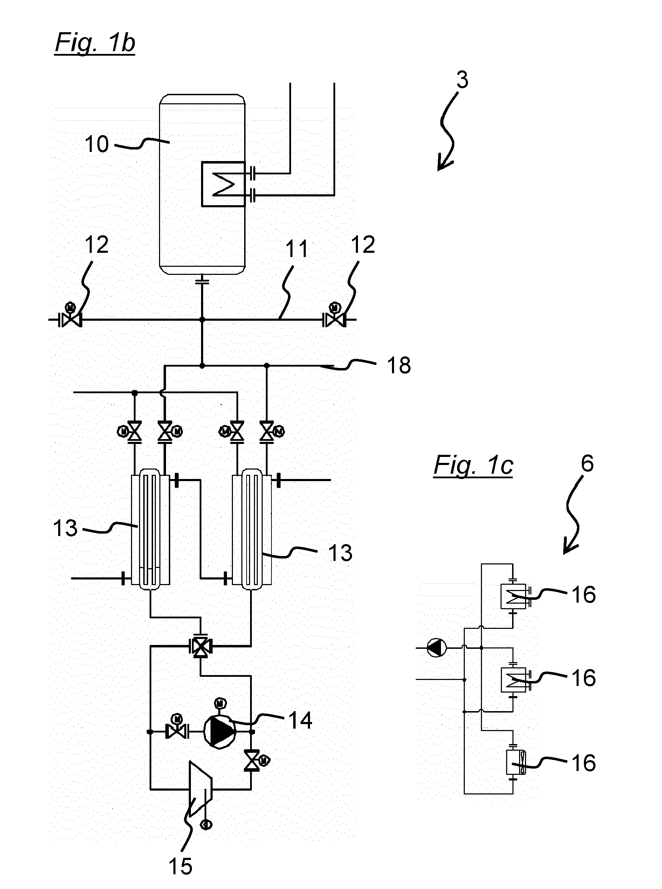

Das in den Figuren 1a bis 1c gezeigte erste Energiespeichersystem 1 weist vier erfindungsgemäße Energiespeicher 2, 3, 4, 5, ein gemeinsames Wärmeausgleichssystem 6 und an dem ersten Energiespeicher 2 einen Luftanschluss 7 zur Umgebung auf. Die Energiespeicher 2, 3, 4, 5 sind über eine gemeinsame Luftleitung 8 in Reihe geschaltet.

Die Energiespeicher 2, 3, 4, 5 sind prinzipiell identisch aufgebaut: Jeder

Energiespeicher 2, 3, 4, 5 weist einen Wandler 9 und einen Druckspeicher 10 auf, die Druckspeicher 10 von je zwei hintereinander geschalteten Energiespeichern 2, 3, 4, 5 sind jeweils über einen Bypass 11 verbunden, die mittels eines Ventils 12 schließbar ist. Die Wandler 9 weisen jeweils zwei Flüssigkolbenwandler 13, eine Pumpe 14 und einen Flüssigkeitsmotor 15 (hier: eine Turbine auf.

Der erste Energiespeicher 2 ist für Umgebungsdruck (1 bar) als Ausgangsdruck und einen Speicherdruck bis zu 5 bar ausgelegt: Die Pumpe 14 ist eine einfache Umwälzpumpe, die Flüssigkolbenwandler 13 weisen ein Volumen von je 25 m³ auf, der Druckspeicher 10 ist ein Behälter mit einem Volumen von 200 m³.

Der zweite Energiespeicher 3 ist für 5 bar Ausgangsdruck und einen Speicherdruck bis zu 20 bar ausgelegt: Die Pumpe 14 ist eine mehrstufige Kreiselpumpe, die Flüssigkolbenwandler 13 weisen ein Volumen von 8 m³ auf, der Druckspeicher 10 ist ein Behälter mit einem Volumen von 200 m³.

Der dritte Energiespeicher 4 ist für 10 bar Ausgangsdruck und einen Speicherdruck bis zu 70 bar ausgelegt: Die Pumpe 14 ist eine mehrstufige Kreiselpumpe, die Flüssigkolbenwandler 13 weisen ein Volumen von 2 m³ auf, der Druckspeicher 10 ist ein Behälter mit einem Volumen von 200 m³.

Der vierte Energiespeicher 5 ist für 70 bar Ausgangsdruck und einen Speicherdruck bis zu 200 bar ausgelegt: Die Pumpe 14 ist eine Hydraulikpumpe, die Flüssigkolbenwandler 13 weisen ein Volumen von je 1 m³ auf, der Druckspeicher 10 ist eine Kaverne mit einem Volumen von 750 m³.

Beim Speichern nehmen jeweils die Pumpen 14 elektrische Energie auf, verdichten mittels der Flüssigkolbenwandler 13 in vier Stufen die Umgebungsluft und pumpen diese in die Druckspeicher 10: Ausgehend vom unbeladenen Zustand sind zunächst die Bypässe zwischen den Druckluftspeichern geöffnet. Der Wandler 9 des ersten Energiespeichers 2 saugt über den Luftanschluss 7 Umgebungsluft an und füllt alle Druckluftspeicher bis zu seinem Speicherdruck. Ist dieser erreicht, wird der Bypass 11 zum zweiten Energiespeicher 3 geschlossen und dessen Wandler 9 zusätzlich in Betrieb genommen, bis in den Druckluftspeichern der folgenden Energiespeicher 4, 5 wiederum sein Speicherdruck erreicht ist. In derselben Weise werden anschließend auch die weiteren Energiespeicher 4, 5 befüllt.

Beim Entnehmen schiebt jeweils die in vier Stufen sich entspannende Luft die Kolbenflüssigkeit der Flüssigkolben durch die Flüssigkeitsmotoren 15, so dass an deren nicht dargestellten Wellen wieder elektrische Energie abgenommen werden kann: Ausgehend vom beladenen Zustand sind zunächst die Bypässe zwischen den Druckluftspeichern geschlossen. Die Luft aus dem Druckspeicher 10 des vierten Energiespeichers 5 wird über alle Wandler 9 stufenweise bis auf Umgebungsdruck entspannt und in die Umgebung abgelassen. Ist im Druckspeicher 10 des vierten Energiespeichers 5 dessen Ausgangsdruck (und der Speicherdruck des dritten Energiespeichers 4) erreicht, so wird der Bypass 11 zu diesem geöffnet und der Wandler 9 des vierten Energiespeichers 5 außer Betrieb gesetzt. In derselben Weise werden die Druckspeicher 10 der vorgeschalteten Energiespeicher 1, 2, 3 bis auf Umgebungsdruck geleert.

Das Wärmeausgleichssystem 6 ist mit Wasser als Wärmeträgerflüssigkeit gefüllt und weist drei Wärmetauscher 16 zum Wärmeaustausch mit der Umgebungsluft, zum Wärmetausch mit Grundwasser oder Geothermie und zur Aufnahme von Prozesswärme auf. Die Flüssigkolbenwandler 13 sind mit nicht dargestellten Leitungen für das Wärmeträgermedium durchsetzt und werden von derm Wärmeträgerflüssigkeit um- und durchströmt. Beim Speichern wird die in den Flüssigkolbenwandlern 13 freiwerdende Wärme zunächst an die Wärmesenke mit der niedrigsten Temperatur abgegeben, im Sommer an das Grundwasser und im Winter an die Umgebungsluft. Nach dem Speichern werden die Druckspeicher 10 aus der Wärmequelle mit der höchsten Temperatur aufgeheizt, soweit verfügbar aus Prozesswärme, ansonsten im Sommer aus der Umgebungsluft und im Winter aus Geothermie. Beim Entnehmen stellen die an die Flüssigkeitsmotoren 15 angeschlossenen Generatoren 20 MWh elektrischer Energie bereit. Das erste Energiespeichersystem 1 weist bei einer Temperaturdifferenz von 50 K zwischen Speichern und Entladen einen elektrischen Wirkungsgrad von über 90 % auf.

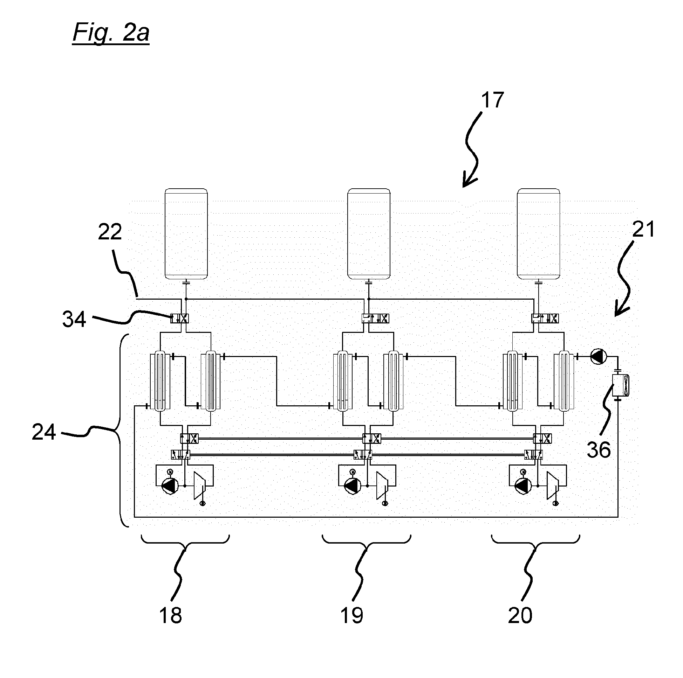

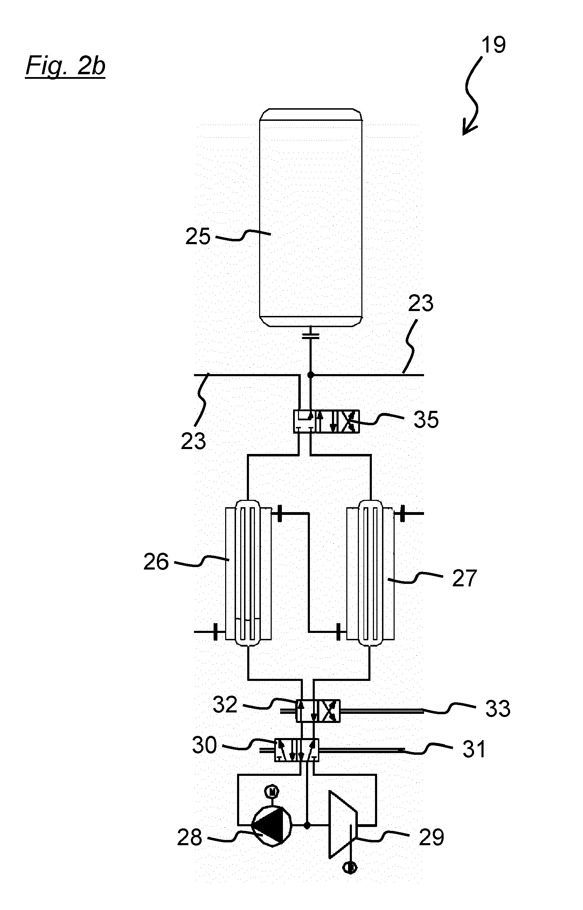

Das in den Figuren 2a und 2b gezeigte zweite Energiespeichersystem 17 weist drei erfindungsgemäße Energiespeicher 18, 19, 20, und wiederum ein gemeinsames Wärmeausgleichssystem 21 und an dem ersten Energiespeicher 18 einen Luftanschluss 22 zur Umgebung auf. Auch hier sind die Energiespeicher 18, 19, 20 über eine gemeinsame Luftleitung 23 in Reihe geschaltet.

Jeder Energiespeicher 18, 19, 20 weist wiederum einen Wandler 24 und einen Druckspeicher 25, jeder Wandler 24 jeweils zwei Flüssigkolbenwandler 26, 27, eine Pumpe 28 und einen Flüssigkeitsmotor 29 auf. Die Pumpe 28 und der Flüssigkeitsmotor 29 sind alternativ über ein 5/2-Wegeventil 30 mit je zwei Durchflusswegen und einem gesperrten Anschluss je Schaltstellung an die Flüssigkolbenwandler 26, 27 angeschlossen, die Strömungsrichtung der Kolbenflüssigkeit der Flüssigkolben zwischen den Flüssigkolbenwandlern 26, 27 wird über ein mit diesem in Reihe geschaltetes 4/2-Wegeventil 32 mit zwei Durchflusswegen je Schaltstellung gesteuert. Die Zyklen der Flüssigkolbenwandler 26, 27 der drei Energiespeicher 18, 19, 20 werden durch eine Kopplung 31 der 4/2-Wegeventile 32 synchronisiert, durch eine weitere Kopplung 33 der 5/2-Wegeventile 30 werden die Energiespeicher 18, 19, 20 synchron auf "Speichern" oder "Entnehmen" geschaltet.

Im ersten Energiespeicher 18 sind der Luftanschluss 22 und der Druckspeicher 25 wechselweise über ein 4/2-Wegeventil 34 mit zwei Durchflusswegen je Schaltstellung an die Flüssigkolbenwandler 26, 27 angeschlossen, im zweiten Energiespeicher 19 und im dritten Energiespeicher 20 kommt stattdessen jeweils ein 4/3-Wegeventil 35 mit einem Durchflussweg in Nebenschlussschaltung (als "Bypass") in einer zusätzlichen Schaltstellung zum Einsatz. In der Nebenschlussschaltstellung wird der Druckspeicher 25 jeweils mit dem Druckspeicher 25 des vorgeschalteten Energiespeichers 18, 19 verbunden.

Der erste Energiespeicher 18 ist für Umgebungsdruck (1 bar) als Ausgangsdruck und einen Speicherdruck bis zu 5 bar ausgelegt: Die Pumpe 28 ist eine einfache Umwälzpumpe, die Flüssigkolbenwandler 26, 27 weisen ein Volumen von je 25 m³ auf, der Druckspeicher 25 ist ein Behälter mit einem Volumen von 200 m³.

Der zweite Energiespeicher 19 ist für 5 bar Ausgangsdruck und einen Speicherdruck bis zu 20 bar ausgelegt: Die Pumpe 28 ist eine mehrstufige Kreiselpumpe, die Flüssigkolbenwandler 26, 27 weisen ein Volumen von 8 m³ auf, der Druckspeicher 25 ist ein Behälter mit einem Volumen von 200 m³.

Der dritte Energiespeicher 20 ist für 20 bar Ausgangsdruck und einen Speicherdruck bis zu 70 bar ausgelegt: Die Pumpe 28 ist eine mehrstufige Kreiselpumpe, die Flüssigkolbenwandler 26, 27 weisen ein Volumen von 2 m³ auf, der Druckspeicher 25 ist ein Behälter mit einem Volumen von 750 m³.

In der in Figur 2a gezeigten Darstellung befinden sich die Energiespeicher 18, 19, 20 im Speicherbetrieb auf einem Druckniveau unterhalb des Speicherdrucks des ersten Energiespeichers 18: Nur die Pumpe 28 des ersten Energiespeichers 18 ist aktiv und pumpt die Kolbenflüssigkeit der Flüssigkolben aus dem rechten Flüssigkolbenwandler 27 in den linken Flüssigkolbenwandler 26. Hierdurch wird Umgebungsluft im rechten Flüssigkolbenwandler 27 aus der Umgebung angesaugt und im linken Flüssigkolbenwandler 26 in die Druckspeicher 25 ausgeschoben. Durch Umschalten des 4/2-Wegeventils 32 zwischen Flüssigkolbenwandlern 26, 27 und Pumpe 28 wird die Strömungsrichtung der Kolbenflüssigkeit der Flüssigkolben umgekehrt und zugleich durch Umschalten des 4/2-Wegeventils 34 zwischen Flüssigkolbenwandlern 26, 27 und Druckspeicher 25 der Anschluss an die Umgebungsluft und an dem Druckspeicher 25 vertauscht.

Sobald in den drei Druckspeichern 25 der Speicherdruck des ersten Energiespeichers 18 erreicht ist, werden im zweiten Energiespeicher 19 dessen Flüssigkolbenwandler 26, 27 und Druckspeicher 25 durch Umschalten des 4/3-Wegeventils 35 verbunden und dessen Pumpe 28 in Betrieb genommen. Sobald in den Druckspeichern 25 des zweiten Energiespeichers 19 und des dritten Energiespeichers 20 der Speicherdruck des zweiten Energiespeichers 19 erreicht ist, wird in gleicher Weise der Wandler 24 des dritten Energiespeichers 20 in Betrieb genommen.

Zum Entnehmen wird das 5/2-Wegeventil 30 umgeschaltet und damit in allen Energiespeichern 18, 19, 20 der Flüssigkeitsmotor 29 mit den

Flüssigkolbenwandlern 26, 27 verbunden. Die verdichtete Luft aus dem Druckspeicher 25 des dritten Energiespeichers 20 wird in dessen Flüssigkolbenwandlern 26, 27 auf den Speicherdruck des zweiten Energiespeichers 19 entspannt, strömt in dessen Druckspeicher 25 und wird in dessen Flüssigkolbenwandlern 26, 27 auf den Speicherdruck des ersten Energiespeichers 18 weiter auf Umgebungsdruck entspannt und durch den Luftanschluss 22 in die Umgebung abgelassen.

Sobald im Druckspeicher 25 des dritten Energiespeichers 20 der Speicherdruck des zweiten Energiespeichers 19 erreicht ist, wird im dritten Energiespeicher 20 das 4/3-Wegeventil 35 die Nebenschlussschaltstellung eingestellt. Die Luft aus strömt dann nur noch durch die Flüssigkolbenwandler 26, 27 des ersten Energiespeichers 18 und des zweiten Energiespeichers 19. Sobald im Druckspeicher 25 des zweiten Energiespeichers 19 der Speicherdruck des ersten Energiespeichers 18 erreicht ist, wird in gleicher Weise der Wandler 24 des zweiten Energiespeichers 19 außer Betrieb genommen.

Auch bei dem zweiten Energiespeichersystem 17 ist das Wärmeausgleichssystem 21 mit Wasser als Wärmeträgerflüssigkeit gefüllt. Hier kommt aber nur ein Wärmetauscher 36 zum Wärmeaustausch mit der Umgebungsluft zum Einsatz. Beim Speichern wird die in den Flüssigkolbenwandlern 26, 27 freiwerdende Wärme an die Umgebungsluft abgegeben, beim Entnehmen wird der Wärmebedarf in den Flüssigkolbenwandlern 26, 27 aus der Umgebungsluft gedeckt. Beim Entnehmen stellen die an die Flüssigkeitsmotoren 29 angeschlossenen Generatoren 5,2 MWh elektrischer Energie bereit. Das zweite Energiespeichersystem 17 weist einen elektrischen Wirkungsgrad von 80 % auf.

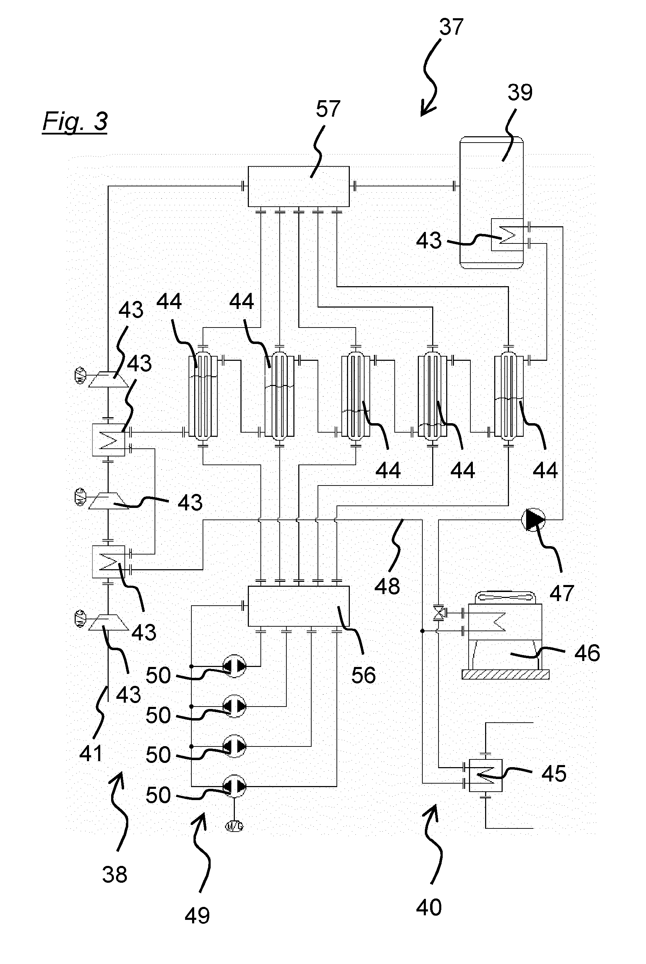

Der in Figur 3 dargestellte erfindungsgemäße Energiespeicher 37 weist einen Wandler 38 zum Verdichten von Luft von Umgebungsdruck auf einen Speicherdruck und einen Druckspeicher 39 zum Speichern der verdichteten Luft sowie ein Wärmeausgleichssystem 40 auf, mittels dessen beim Verdichten anfallende Wärme abführbar und beim Entspannen der verdichteten Luft benötigte Wärme zuführbar ist. In dem erfindungsgemäßen Energiespeicher 37 wird bei Stromüberschuss im Versorgungsnetz Umgebungsluft auf bis zu 300 bar annähernd isotherm verdichtet und gespeichert. Bei hohen Strompreisen oder Strombedarf wird die verdichtete Luft wieder auf Umgebungsdruck annähernd isotherm entspannt und dabei die gespeicherte Energie in Strom zurückgewandelt.

Zum Speichern wird die an einem Luftanschluss 41 entnommene Umgebungsluft zunächst in drei Stufen mit Turbomaschinen 42 auf etwa 10 bar und ein Zehntel des ursprünglichen Volumens verdichtet. Zwischen den Turbomaschinen 42 wird die Luft mittels Wärmetauschern 43 gekühlt.

Die vorverdichtete Luft wird mit mehreren parallel und gegeneinander phasenverschoben betriebenen Flüssigkolbenwandlern 44 weiter verdichtet. Flüssigkolbenwandler sind insbesondere bei geringen Volumenströmen und hohen Differenzdrücken im Vergleich zu Turbomaschinen effizienter und technisch weniger aufwändig. Je nach verfügbarer elektrischer Leistung und abhängig vom bereits in dem Druckspeicher 39 erreichten Druckniveau wird die Luft in Takten von 10 bis 60 Sekunden von 10 bar weiter auf bis zu 300 bar verdichtet.

Die Flüssigkolbenwärmetauscher sind - wie auch in den vorherigen Ausführungsbeispielen - als allgemein bekannte Rohrbündelwärmeübertrager ausgebildet: In den Innenrohren wird die Luft verdichtet und anschließend durch die Kolbenflüssigkeit verdrängt und in den Druckspeicher 39 ausgeschoben. Im Mantel führt die Wärmeträgerflüssigkeit die Verdichtungswärme ab. Die Rückkühlung erfolgt bevorzugt an die Umgebung mittels eines trockenen Rückkühlers oder eines Kühlturms. Je niedriger die Rückkühltemperatur ist, desto mehr Druckluft kann bei gleicher aufgewendeter elektrischer Energiemenge verdichtet werden.

Das Wärmeausgleichssystem 40 besteht aus einem Prozesswärmeübertrager 45 und einem Außenluft- und Wasserwärmeübertrager 46, einer Pumpe 47 für die Wärmeträgerflüssigkeit (hier: Wasser), den Wärmetauschern 43 zwischen den Turbomaschinen 42 und am Druckspeicher 39 sowie einer Wärmeträgerleitung 48 von der Pumpe 47 über den Druckspeicher 39, die Flüssigkolbenwandler 44 und die Wärmetauscher zwischen den Turbomaschinen 42.

Da die technische Arbeit bei der Verdichtung von 10 bar auf 300 bar proportional zur Druckdifferenz zunimmt, werden in der Wandlergruppe 49 zum Pumpen der Kolbenflüssigkeit vier einzelne Axialkolbenmaschinen 50 eingesetzt.

Die auf bis zu 300 bar verdichtete Druckluft wird in dem Druckspeicher 39 bei Umgebungstemperatur gespeichert. Der Druckspeicher 39 kann aus Batterien von Druckgasflaschen oder anderen Druckbehältern (beispielsweise Stahl- oder Stahl-Beton-Tanks) bestehen. Damit sich die Luft in dem Druckspeicher 39 beim Beladen nicht übermäßig erwärmt und beim Entladen nicht abkühlt, muss auch dort Wärme zu- bzw. abgeführt werden. Bei Batterien von Gasflaschen reicht unter Umständen deren Oberfläche für die Wärmeübertragung aus. In diesem Fall könnte relativ einfach durch eine Umspülung der Flaschen für eine ausreichende Kühl- und Heizwirkung gesorgt werden. In größeren Tanks müssen Wärmetauscherrohrschlangen integriert werden.

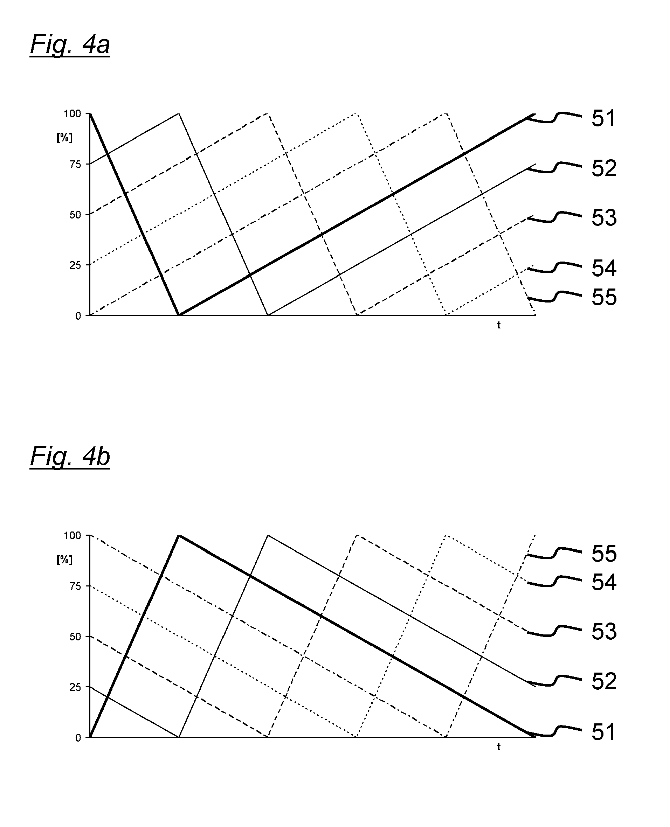

Figur 4a zeigt die Füllstände 51 - 55 der Kolbenflüssigkeit in den Flüssigkolbenwandlern 44 in einem Zyklus beim Laden des erfindungsgemäßen Energiespeichers 37: Zu jedem Zeitpunkt wird gleichzeitig in vier Flüssigkolbenwandlern 44 Luft verdichtet. Hierzu wird die Kolbenflüssigkeit (hier: Hydrauliköl) mittels der elektrisch betriebenen Wandlergruppe 49 aus dem jeweils fünften Flüssigkolbenwandler 44 entnommen und in die vier verdichtenden Flüssigkolbenwandler 44 gepumpt. Der fünfte Flüssigkolbenwandler 44 saugt durch die ausströmende Kolbenflüssigkeit zugleich in einem Fünftel eines Taktes die von den Turbomaschinen 42 vorverdichtete Umgebungsluft an.

Zum gleichen Zeitpunkt, wenn der fünfte Flüssigkolbenwandler 44 vollständig mit Luft gefüllt ist, wird in einem der zuvor verdichtenden Flüssigkolbenwandler 44 die verdichtete Luft vollständig in den Druckspeicher 39 ausgeschoben. Durch Umstellen von Ventilen in einer hydraulischen Kolbensteuerung 56 werden die Funktionen der Flüssigkolbenwandler 44 dann getauscht: Aus dem Flüssigkolbenwandler 44, aus dem gerade die verdichtete Luft ausgeschoben wurde und somit vollständig mit der Flüssigkeit gefüllt ist, entnehmen nun alle anderen die Kolbenflüssigkeit. Und in dem Flüssigkolbenwandler 44, aus dem zum vorherigen Teiltakt noch die Flüssigkeit entzogen wurde, beginnt nun die Verdichtung, indem die Wandlergruppe 49 dort die Kolbenflüssigkeit einpresst. Entsprechend werden durch Ventile in einer Luftsteuerung 57 die Flüssigkolbenverdichter mit der vorverdichteten Luft aus den Turbomaschinen 42, während der Verdichtung verschlossen und bei Erreichen des jeweils aktuellen Speicherdrucks mit dem Druckspeicher 39 verbunden.

Figur 4b zeigt die Füllstände 51 - 55 der Kolbenflüssigkeit in den Flüssigkolbenwandlern 44 in einem Zyklus beim Entnehmen von Energie aus dem dritten Energiespeichersystem: Beim Entspannungsvorgang leitet die Luftsteuerung 57 verdichtete Luft aus dem Druckspeicher 39 in den Flüssigkolbenzylinder, der gerade vollständig mit der Kolbenflüssigkeit gefüllt ist. Nach Öffnen des entsprechenden Ventils in der Wandlergruppe 49 wird die Kolbenflüssigkeit durch die expandierende Druckluft verdrängt und durch die Wandlergruppe 49 ausgeschoben und erzeugt über nicht dargestellte, an die Wandlergruppe 49 angeschlossene Generatoren Strom. Die Kolbenflüssigkeit von vier jeweils gleichzeitig entspannenden Flüssigkolbenwandlern 44 strömt in einen fünften Flüssigkolbenwandler 44, in dem die Luft bereits auf den Druck von ca. 10 bar entspannt wurde. Durch die einströmende Kolbenflüssigkeit wird die Luft aus diesem Flüssigkolbenwandler 44 zu den Turbomaschinen 42 ausgeschoben, die sie wieder dreistufig jeweils mit Nacherwärmung von 10 bar auf Umgebungsdruck entspannen.

Während der Entspannung werden sämtliche Flüssigkolbenwandler 44 von der im Mantel strömenden Wärmeträgerflüssigkeit beheizt. Die Wärme kommt entweder aus der Umgebung, welche z. B. über Luft/Wasser-Wärmeübertrager gewonnen wird oder aus industrieller Abwärme. Je höher die Temperatur bei der Entspannung ist, desto mehr elektrischer Strom wird pro Kilogramm gespeicherter Druckluft erzeugt.

Entsprechend ersten Simulationen werden bei einer Temperaturdifferenz von ca. 100 K zwischen Verdichtung und Entspannung sämtliche Verluste der einzelnen Anlagenkomponenten durch die zusätzlich freiwerdende technische Arbeit wieder ausgeglichen. Dadurch entspricht die eingespeiste Strommenge in etwa der ausgespeisten Strommenge. Bei gleicher Verdichtungs- und Entspannungstemperatur wird ein elektrischer Wirkungsgrad wie bei adiabaten Druckluftspeichern von ca. 0,7 erreicht, welcher im Wesentlichen durch die Verluste in den Axialkolbenmaschinen 50 und in den Turbomaschinen 42 begründet ist.

### In den Zeichnungsfiguren sind

- 1: Energiespeichersystem
- 2: Energiespeicher
- 3: Energiespeicher
- 4: Energiespeicher
- 5: Energiespeicher
- 6: Wärmeausgleichssystem
- 7: Luftanschluss
- 8: Luftleitung
- 9: Wandler
- 10: Druckspeicher
- 11: Bypass
- 12: Ventil
- 13: Flüssigkolbenwandler
- 14: Pumpe
- 15: Flüssigkeitsmotor
- 16: Wärmetauscher
- 17: Energiespeichersystem
- 18: Energiespeicher
- 19: Energiespeicher
- 20: Energiespeicher
- 21: Wärmeausgleichssystem
- 22: Luftanschluss
- 23: Luftleitung
- 24: Wandler
- 25: Druckspeicher
- 26: Flüssigkolbenwandler
- 27: Flüssigkolbenwandler
- 28: Pumpe
- 29: Flüssigkeitsmotor
- 30: 5/2-Wegeventil
- 31: Kopplung
- 32: 4/2-Wegeventil
- 33: Kopplung
- 34: 4/2-Wegeventil
- 35: 4/3-Wegeventil
- 36: Wärmetauscher
- 37: Energiespeicher
- 38: Wandler
- 39: Druckspeicher
- 40: Wärmeausgleichssystem
- 41: Luftanschluss
- 42: Turbomaschine
- 43: Wärmetauscher
- 44: Flüssigkolbenwandler
- 45: Prozesswärmeübertrager
- 46: Außenluft- und Wasserwärmeübertrager
- 47: Pumpe
- 48: Wärmeträgerleitung
- 49: Wandlergruppe
- 50: Axialkolbenmaschine
- 51: Füllstand 1
- 52: Füllstand 2
- 53: Füllstand 3
- 54: Füllstand 4
- 55: Füllstand 5
- 56: Kolbensteuerung
- 57: Luftsteuerung

## Patentansprüche

1. Energiespeicher (2, 3, 4, 5, 18, 19, 20, 37) mit einem Wandler (9, 24, 38) zum Verdichten von Luft von einem Ausgangsdruck bis auf einen Speicherdruck unter Einsatz von Energie sowie zum Entspannen der Luft von dem Speicherdruck auf den Ausgangsdruck, und mit einem Druckspeicher (10, 25, 39), in den die mittels des Wandlers (9, 24, 38) verdichtete Luft ladbar und aus dem die verdichtete Luft zum Entspannen durch den Wandler (9, 24, 38) wieder ablassbar ist, wobei beim Ablassen an einer rotierbaren Welle des Wandlers (9, 24, 38) die Energie im Wesentlichen zurück gewinnbar ist, wobei der Wandler (9, 24, 38) mindestens einen Flüssigkolbenwandler (13, 26, 27, 44) mit jeweils einem Flüssigkolben zum Verdichten und Entspannen der Luft aufweist, eine Pumpe (14, 28) zum Pumpen einer Kolbenflüssigkeit des mindestens einen Flüssigkolben unter Einsatz der Energie sowie einen mittels der Kolbenflüssigkeit antreibbaren Flüssigkeitsmotor (15, 29) zum Antreiben der Welle, wobei aus dem mindestens einen Flüssigkolbenwandler (13, 26, 27, 44) mittels einer Wärmeträgerflüssigkeit Wärme abführbar und in den mindestens einen Flüssigkolbenwandler (13, 26, 27, 44) mittels der Wärmeträgerflüssigkeit Wärme zuführbar ist, ***dadurch gekennzeichnet, dass*** die Wärmeträgerflüssigkeit von der Kolbenflüssigkeit fluidtechnisch getrennt ist.

2. Energiespeicher (2, 3, 4, 5, 18, 19, 20, 37) nach einem der vorgenannten Ansprüche, ***gekennzeichnet durch*** einen von der Wärmeträgerflüssigkeit durchflossenen Wärmetauscher (16) an dem Druckspeicher (10, 25, 39), mittels dessen Wärme aus dem Druckspeicher (10, 25, 39) abführbar und Wärme dem Druckspeicher (10, 25, 39) zuführbar ist.

3. Energiespeicher (37) nach einem der vorgenannten Ansprüche, ***gekennzeichnet durch*** mindestens eine Turbomaschine (42) zum Vorverdichten oder Nachentspannen der Luft zwischen einem Luftanschluss (41) und dem mindestens einen Flüssigkolbenwandler (44).

4. Energiespeicher (37) nach einem der vorgenannten Ansprüche, ***gekennzeichnet durch*** eine Mehrzahl der Flüssigkolbenwandler (44), zum Laden eines gemeinsamen Druckspeichers (39), sowie **durch** eine Kolbensteuerung (56) zum Verbinden jeweils genau eines ersten der Flüssigkolbenwandler (44) aus der Mehrzahl mit den übrigen Flüssigkolbenwandlern (44) aus der Mehrzahl.

5. Energiespeicher (37) nach dem vorgenannten Anspruch, ***gekennzeichnet durch*** eine Wandlergruppe (49) mit mindestens einer Axialkolbenmaschine (50) je Flüssigkolbenwandler (44).

6. Energiespeichersystem (1, 17) mit einem ersten Energiespeicher (2, 18) für einen ersten Speicherdruck und einem zweiten Energiespeicher (5, 20) für einen zweiten Speicherdruck oberhalb des ersten Speicherdrucks jeweils nach einem der vorgenannten Ansprüche, sowie mit einem Luftanschluss (7, 22) aus einer Umgebung des Energiespeichersystems (1, 17) zu dem Wandler (9, 24) des ersten Energiespeichers (2, 18) und mit einer Luftleitung (8, 23) zwischen dem Wandler (9, 24) des ersten Energiespeichers (2, 18) und dem Wandler (9, 24) des zweiten Energiespeichers (5, 20).

7. Energiespeichersystem (1, 17) nach dem vorgenannten Anspruch, ***gekennzeichnet durch*** einen Bypass (11) zwischen dem Druckspeicher (10, 25) des ersten Energiespeichers (2, 18) und dem Druckspeicher (10, 25) des zweiten Energiespeichers (5, 20).

8. Energiespeichersystem (1, 17) nach einem der Ansprüche 6 und 7, ***gekennzeichnet durch*** mindestens einen weiteren Energiespeicher (3, 4, 19) nach einem der Ansprüche 1 bis 5 für einen weiteren Speicherdruck zwischen dem ersten Speicherdruck und dem zweiten Speicherdruck, wobei der Wandler (9, 24) des mindestens einen weiteren Energiespeichers (3, 4, 19) die Luftleitung (8, 23) unterbricht.

9. Verfahren zum Betrieb eines Energiespeichers (2, 3, 4, 5, 18, 19, 20, 37), wobei beim Speichern mittels eines Wandlers (9, 24, 38) unter Einsatz von Energie Luft in einen Druckspeicher (10, 25, 39) gepumpt und dabei von einem Ausgangsdruck bis auf einen Speicherdruck verdichtet wird und wobei beim Entnehmen die Luft aus dem Druckspeicher (10, 25, 39) durch den Wandler (9, 24, 38) abgelassen und auf den Ausgangsdruck entspannt und dabei an einer rotierbaren Welle des Wandlers (9, 24, 38) die Energie im Wesentlichen zurückgewonnen wird, wobei in dem Wandler (9, 24, 38) die Luft im Wesentlichen isotherm verdichtet und entspannt wird, wobei beim Verdichten aus dem Wandler (9, 24, 38) mittels einer Wärmeträgerflüssigkeit Wärme abgeführt und beim Entspannen in den Wandler (9, 24, 38) mittels der Wärmeträgerflüssigkeit Wärme zugeführt wird, wobei der Wandler (9, 24, 38) mindestens einen Flüssigkolbenwandler (13, 26, 27, 44) mit jeweils einem Flüssigkolben zum Verdichten und Entspannen der Luft aufweist, ***dadurch gekennzeichnet, dass*** die Wärmeträgerflüssigkeit in einem Wärmeausgleichssystem (6, 21, 40) von einer Kolbenflüssigkeit des Flüssigkolbenwanders (13, 26, 27, 44) fluidtechnisch getrennt ist.

10. Verfahren nach dem vorgenannten Anspruch, ***dadurch gekennzeichnet, dass*** beim Speichern aus dem Druckspeicher (10, 25, 39) Wärme derart abgeführt wird, dass eine Temperatur in dem Druckspeicher (10, 25, 39) nicht steigt.

11. Verfahren nach einem der Ansprüche 9 und 10, ***dadurch gekennzeichnet, dass*** zwischen Speichern und Entnehmen dem Druckspeicher (10, 25, 39) Wärme zugeführt wird.

12. Verfahren nach einem der Ansprüche 9 bis 11, ***dadurch gekennzeichnet, dass*** beim Entnehmen dem Druckspeicher (10, 25, 39) Wärme derart zugeführt wird, dass eine Temperatur in dem Druckspeicher (10, 25, 39) nicht sinkt.

13. Verfahren zum Betrieb einer Mehrzahl von Energiespeichern (2, 3, 4, 5, 18, 19, 20) jeweils gemäß einem Verfahren nach einem der Ansprüche 9 bis 12, wobei der Ausgangsdruck eines ersten der Energiespeicher (2, 3, 4, 5, 18, 19, 20) ein Umgebungsdruck und der Ausgangsdruck jedes weiteren der Energiespeicher (2, 3, 4, 5, 18, 19, 20) jeweils der Speicherdruck eines der Energiespeicher (2, 3, 4, 5, 18, 19, 20) ist.

14. Verfahren nach Anspruch 9, ***dadurch gekennzeichnet, dass*** in dem Wandler (38) eine Mehrzahl der Flüssigkolbenwandler (44) derart phasenverschoben arbeiten, dass zu jedem Zeitpunkt ein erster der Flüssigkolbenwandler (44) aus der Mehrzahl den übrigen Flüssigkolbenwandlern (44) aus der Mehrzahl entgegengesetzt arbeitet.

15. Verfahren nach dem vorgenannten Anspruch, ***dadurch gekennzeichnet, dass*** zu jedem Zeitpunkt die Kolbenflüssigkeit zwischen dem ersten und den übrigen Flüssigkolbenwandlern ausgetauscht wird.
